# EUROPEAN PATENT SPECIFICATION

(11) **EP 2 734 722 B1**
(45) Date of publication and mention of the grant of the patent: **06.05.2015**
(21) Application number: 12756013.4
(22) Date of filing: 18.07.2012
(51) Int. Cl.: F02M 25/12, F02G 5/02, F24H 1/00, F01N 5/02

(54) **FUEL PRODUCTION APPARATUS**
KRAFTSTOFFERZEUGUNGSVORRICHTUNG
DISPOSITIF DE PRODUCTION DE CARBURANT

(30) Priority: 18.07.2011 GB 201112299
(43) Date of publication of application: 28.05.2014
(73) Proprietor: Elsarrag, Esam, Doha (QA); Al-Horr, Yousef, Doha (QA)
(72) Inventor: ELSARRAG, Esam, Doha (QA); AL-HORR, Yousef, Doha (QA)
(74) Representative: Gaunt, Thomas Derrick
(86) International application number: PCT/GB2012/051719
(87) International publication number: WO 2013/011313

(56) References cited:
- EP-A1- 0 486 911
- WO-A2-2010/036914
- US-A1- 2006 179 819
- US-A1- 2007 045 044
- US-A1- 2009 020 281
- DATABASE WPI Week 201011 Thomson Scientific, London, GB; AN 2010-B02086 XP002688335, -& CN 101 626 212 A (UNIV SOUTHEAST) 13 January 2010 (2010-01-13)

## Description

The present invention concerns apparatus for the production of fuel, and more specifically relates to apparatus for the production of hydrogen (H2) or Brown's gas (HHO).

In this respect, hydrogen (H2) and Brown's gas (HHO) are being increasingly used in the auto industry as a source of energy. This is partly because of their environmentally beneficial credentials, and moreover due to improvements in their generation efficiency.

The concept of using such gases as an alternative fuel for engines is relatively recent. In this respect, the self ignition temperature of hydrogen (H2) is 858K, so that it cannot be used directly in an internal combustion engine without a spark plug or glow plug. This has made hydrogen (H2) unsuitable as a sole fuel for Compression Ignition Engines. Due to the low ignition energy and wide flammable range of hydrogen (H2), hydrogen engines are however suitable to run at lean conditions which are helpful for the enhanced engine economic and emissions performance. All regulated pollutant emissions, except nitrogen oxides, can be simply reduced by using a carbon-free fuel. This is true whatever the alternative fuel source if the production of this carbon-free fuel in large plants is more efficient and therefore produces less CO than the direct conversion of the fuel source into mechanical power in the internal combustion engine. The combination of its molecular composition and some of its peculiar properties (high laminar flame speed, wide flammability range, etc.) reveals hydrogen (H2) as an attractive fuel for Internal Combustion Engines. Furthermore, compared with traditional fossil fuels, hydrogen (H2) is a carbonless fuel whose combustion does not generate emissions such as HC, CO and C02.

However, where hydrogen (H2) or Brown's gas (HHO) are to be used on a vehicle, such gases either need to be stored locally on the vehicle or generated on the vehicle itself.

Storage of such gases in sufficient quantity on the vehicle brings with it many issues in terms of safety and additional storage space and equipment. Where generated on the vehicle, some form of generator, such as a fuel cell, and power source for generation is required. In this connection, current hydrogen (H2) or Brown's gas (HHO) generators often use the vehicle's alternator to provide the necessary power for the fuel cell to generate the gas. However, when assessing efficiency of the overall system, this use of power for the fuel cell to generate the gas is often ignored as an additional load on the engine.

Moreover, when such generators are tested in the laboratory, they generally use auxiliary battery systems. As such, whilst researchers report that they can save significant fuel by additionally using gases such as hydrogen (H2) and Brown's gas (HHO), the reality is more complex in that there is an additional load or power requirement which is often not taken into account.

US 2006/0179819 A1 relates to a system for reducing vehicle emissions in a vehicle having an internal combustion engine and a catalytic converter by rapidly bringing the catalytic converter to light-off temperature by introducing a hydrogen containing fluid into the exhaust stream. The hydrogen containing fluid is generated by an on-board electrolysis device, for example by a thermoelectric generator secured to or integral with the catalytic converter. This hydrogen gas may also be added to the fuel intake to boost fuel efficiency and further reduce emissions.

US 2009/020281 A1 describes a system for supplying electric power generated by an electric power generator to power loads in a household, and recovering exhaust heat generated by the electric power generator by an exhaust heat recovery circuit to make use of the exhaust heat as a heat source for heating water.

US 4,368,696 describes a combination internal combustion engine and electrolyser for producing hydrogen and oxygen gases from water on board a motor vehicle in order to supplement the gasoline fuel for the engine. A heat activated engine provides the electrical current necessary to decompose the water, and is activated directly from heat derived from the exhaust of the internal combustion engine. The oxygen and hydrogen gases formed by the electrolysis of water are passed to storage tanks. After storage, the gasses can be fed to the carburetor of the internal combustion engine and enable the use of a much leaner gasoline to air mixture.

In this respect, according to the present invention there is provided fuel production apparatus for use with a combustion device comprising:- a fuel cell for generating a combustible gas; and power supply means for said fuel cell, said power supply means comprising means for converting energy from a source of waste energy associated with the combustion device into electrical energy for powering said fuel cell; wherein the generated combustible gas is fed directly into an air intake stream of said combustion device for combustion by the combustion device.

The benefits derived from the present invention as such include a boost to the combustion device's efficiency by converting waste heat from its exhaust into hydrogen (H2) or Brown's gas (HHO) via a fuel cell, the hydrogen (H2) or Brown's gas (HHO) then being available for injection to the combustion device. Installing such apparatus can also improve the performance of older combustion devices, such as old vehicles and thereby reduce the carbon emissions.

The benefits derived from the present invention as such further include a boost to the combustion device's efficiency by converting heat absorbed by photovoltaic modules and by using thermoelectric modules, this combination is so called PV-TE, into hydrogen (H2) or Brown's gas (HHO) via a fuel cell, the hydrogen (H2) or Brown's gas (HHO) then being available for injection to the combustion device. Installing such apparatus can also improve the performance of older combustion devices, such as old vehicles and thereby reduce the carbon emissions. The PV modules could be kept at lower temperatures, which should increase the performance of a solar-power-plant build in this region significantly. Furthermore, the infrared radiation can then be used for heating a thermoelectric generator, increasing the total efficiency of solar to electrical conversion even further and hence more fuel production.

The benefits derived from the present invention as such additionally include a boost to the combustion device's efficiency by converting waste heat from a combination of Exhaust and PV-TE into hydrogen (H2) or Brown's gas (HHO) via a fuel cell, the hydrogen (H2) or Brown's gas (HHO) then being available for injection to the combustion device.

In this connection, there are several reasons for using hydrogen (H2) as an additional fuel to accompany, in particular, diesel fuel in a Compression Ignition (CI) engine. Firstly, it increases the H/C ratio of the entire fuel. Secondly, injecting small amounts of hydrogen (H2) to a diesel engine could decrease heterogeneity of a diesel fuel spray due to the high diffusivity of hydrogen (H2) which makes the combustible mixture better premixed with air and more uniform. It could also reduce the combustion duration due to hydrogen's high speed of flame propagation in relation to other fuels.

Preferably, said waste energy source is derived from an exhaust of the combustion device combusting said combustible gas. In practice therefore, the heat energy ordinarily lost together with the exhaust from, for example, a vehicle or boiler can be recovered and used to power a fuel cell for generating fuel for the vehicle engine or boiler.

Preferably, said waste heat is derived from photovoltaic device via thermoelectric modules. In practice therefore, PV modules could be kept at lower temperatures, which should increase the performance of a solar-power-plant build in this region significantly. Furthermore, the infrared radiation can then be used for heating a thermoelectric generator, increasing the total efficiency of solar to electrical conversion even further and hence more fuel production.

The power supply means is in this respect conveniently provided at or adjacent an exhaust stream from the combustion device.

Conveniently, said power supply means comprises one or more thick or thin film thermoelectric modules. The power supply means may further comprise one or more high and/or low temperature thermoelectric modules. These are established as a reliable source for converting heat energy to electricity.

Preferably, the waste energy source is derived from solar energy applied to the combustion device. In this respect, such solar energy can supplement other energy sources for the fuel cell.

Conveniently, the solar energy is collected using one or more of photovoltaics (PV), PV-TE, concentrated solar power (CSP), CSP with thermoelectric (CSP-TE), or by techniques of artificial photosynthesis.

The combustion device is preferably an engine for a vehicle, but may alternatively be a central heating boiler, gas burner or welding set. In such cases, with conventional arrangements a great deal of energy is simply wasted as a byproduct of combustion. The present invention seeks to alleviate this wastage and put such heat energy to good use.

The present invention can hence be used to boost the efficiency of Natural gas or Biomass Boilers or any fuelled boiler by converting the exhaust heat loss to hydrogen (H2) or Brown's gas (HHO) and hence improve the overall efficiency of the boiler and reduce carbon emissions.

Conveniently, the combustible gas is one of hydrogen (H2) or Brown's gas (HHO). These gases have been found to offer suitable characteristics for use in the present invention.

Preferably, at least some of the electrical energy generated is stored in a storage means. In this way the ultimate use of the electrical energy generated can be optimised.

The present invention therefore proposes apparatus which can, for example, be incorporated in an engine system to integrate a Brown's gas (HHO) or hydrogen (H2) production system with a gasoline engine.

Moreover, the present invention can be used to boost the efficiency of a combined heat and power engine or a fuel cell by converting the heat loss from combustion or its surroundings to fuel hydrogen (H2) or Brown's gas (HHO).

Furthermore, the present invention can be used to enhance the efficiency of photovoltaic arrangements by converting the heat absorbed into electricity and produce a combustible gas such as hydrogen (H2) or Brown's gas (HHO), to convert the heat absorbed by any surface to hydrogen (H2) or Brown's gas (HHO), and to convert heat from heat rejected by radiators to electricity and hence hydrogen (H2) or Brown's gas (HHO).

In the present invention, there is little or no additional load on the alternator by recovering heat from one or more of the exhaust, radiators and vehicle surface (which could be absorbed by solar energy) and converting this into electricity which is used with a fuel cell to generate a suitable combustion gas, such as hydrogen (H2) or Brown's gas (HHO).

Examples of the invention will now be described with reference to the accompanying drawings, of which:-
Figure 1 shows a schematic diagram of the main apparatus elements according to the present invention;
Figure 2a shows a first embodiment of an assembly for the production of hydrogen (H2) or Brown's gas (HHO) using heat energy from an exhaust stream in an air cooled system according to the present invention;
Figure 2b shows an embodiment of an assembly for the production of hydrogen (H2) or Brown's gas (HHO) using heat energy from an exhaust stream in a water cooled system according to the present invention
Figure 3 shows a further embodiment of an assembly for the production of hydrogen (H2) or Brown's gas (HHO) using heat from solar energy panel preferably Photovoltaic-Thermoelectric (PV-TE) or Concentrated-Thermoelectric (CSP-TE) according to the present invention;
Figure 4 shows an embodiment of an assembly for the production of hydrogen (H2) or Brown's gas (HHO) using heat from an exhaust stream of a boiler according to the present invention; and

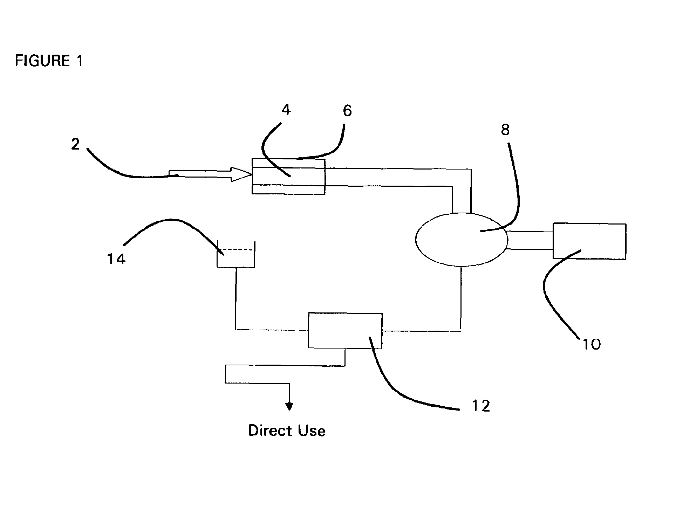

In Figure 1, an exhaust stream 2 of an internal combustion engine ICE (not shown in this figure) flows through heat exchanger 4, which contains one or more thermoelectric modules 6.

The heat exchanger takes the form of thermoelectric modules 6, which use the heat energy in the exhaust stream 2 to generate electricity. This electricity is directed to a regulator 8. The electricity is then directed to a battery 10 and/or a fuel cell 12. The fuel cell 12 produces a combustible product such as hydrogen (H2) or Brown's gas (HHO) using water electrolysis, water for the process being provided from liquid holding tank 14. The gas is then fed directly into the combustion device to be used as fuel for combustion.

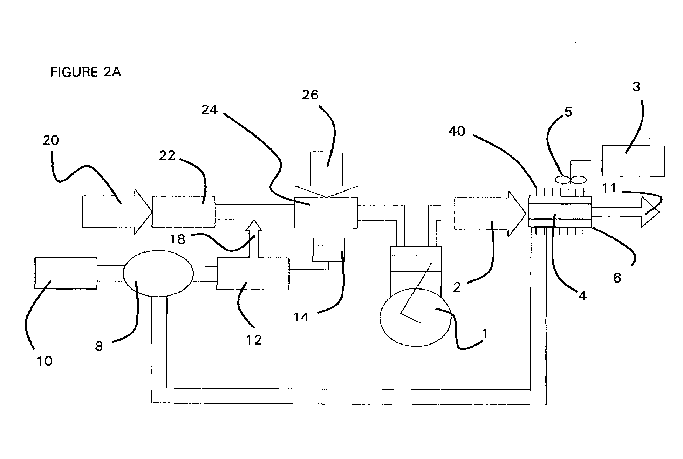

Figure 2a shows in more detail a first embodiment of an assembly for the production of hydrogen (H2) or Brown's gas (HHO) using heat from an exhaust stream of an internal combustion engine 1 for an air-cooled system.

The components of the assembly include: a cooling fan 5 controlled by an electronic circuit 7; a heat exchanger 4 containing thermoelectric power modules 6; a power regulator 8; a battery 10; a hydrogen (H2) or HHO fuel cell 12; an internal combustion engine 1; and a liquid holding tank 14.

The exhaust stream 2 from the internal combustion engine 1 is fed to a heat exchanger 4, which may be single stage or multi stage and uses air from the cooling fan 5 as the process fluid. The cooling fan 5 is controlled by an electronic circuit 7 which may turn the cooling fan 5 off whilst the vehicle is moving and turn the cooling fan 5 on when it is stationery for example at a traffic lights. The cooling fan 5 forces air into the heat exchanger 4 that reject heat through heat sink 40.

The heat exchanger 4 transfers heat from the exhaust gas 2 to the cooling air stream and electricity is generated using thermoelectric modules 6. The thermoelectric modules 6 may have thick film or thin film components. The exhaust stream 2 leaves the heat exchanger 4 as low temperature exhaust stream 11.

The electricity generated by the thermoelectric modules 6 flows through a power regulator 8, which regulates the voltage and can direct the electricity either to a fuel cell 12 or to a battery 10.

The battery 10 can be the existing battery in the vehicle, or an additional battery unit can be added.

Referring to the fuel cell 12, this can be a hydrogen (H2) fuel cell, such as a proton exchange fuel cell, or a HHO fuel cell. When the fuel cell 12 is a hydrogen (H2) fuel cell, distilled water is supplied from the liquid holding tank 14 and hydrogen (H2) is produced using water electrolysis. When the fuel cell is a HHO fuel cell, electrolyte is provided from the liquid holding tank 14 and HHO is produced using water electrolysis.

The hydrogen (H2) or HHO 18 produced can then be mixed with air 20, which passes through an air filter 22, and can be used to fuel the internal combustion engine 1. The hydrogen (H2) or HHO 18 is fed into the internal combustion engine 1 using the air stream.

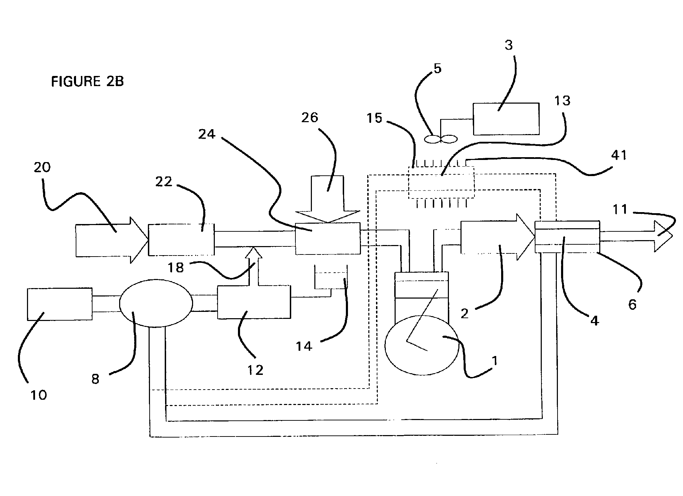

Figure 2b shows a water-cooled option. The heat exchanger 4 transfers heat from the gas 2 to the cooling water, oil, organic or any fuel that could enhance the heat transfer as a process fluid, and hence electricity is generated using a thermoelectric module 6. The thermoelectric modules may be thick or thin type. The exhaust stream 2 leaves the heat exchanger 4 as a low temperature exhaust stream 11.

The dashed lines in Figure 2b show a further embodiment where a second heat exchanger 13 with thermoelectric modules 15 is added. The second heat exchanger 13 uses waste heat from both the combustion engine 1 and first heat exchanger 4, and generates electricity using thermoelectric modules 15, which may be low temperature. The second heat exchanger 13 may use water, oil or any organic as the process fluid.

The second heat exchanger 13 works as an additional radiator that cools down the circulated fluid that absorbs heat from heat exchanger 4. A variable speed fan 5 rejects heat to the atmosphere through the heat sink 41 and is controlled by 3. The dashed heat exchanger could also be used as an individual unit or integrated with the existing radiator without using the exhaust.

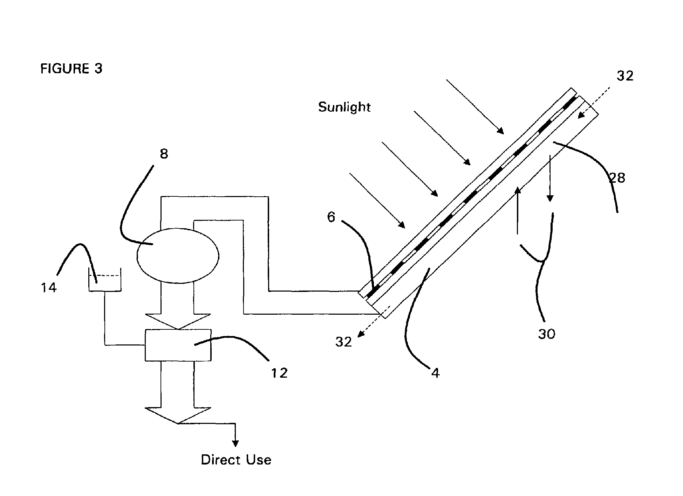

Figure 3 shows a third embodiment of an assembly for the production of hydrogen (H2) or Brown's gas (HHO) using heat from solar energy panel 28.

The components of the assembly include: a photovoltaic solar energy panel 28; a heat exchanger 4 containing thermoelectric power modules 6; a power regulator 8; a hydrogen (H2) or HHO fuel cell 12 and a liquid holding tank 14. The photovoltaic solar energy panel 28 can in this respect be a hybrid solar energy panel.

The heat exchanger 4 heats cooling water 30 using heat absorbed by the solar energy panel 28. Electricity is then generated using thermoelectric modules 6. In addition to this electricity can be generated, using other conventional methods from the solar energy panel 28.

The electricity generated by the solar energy panel 28 and the thermoelectric 6 flows through a power regulator 8, which regulates the voltage and transfers the electricity directly to the fuel cell 12. In this regard, the fuel cell 12 can be a hydrogen (H2) fuel cell, such as a proton exchange fuel cell, or a HHO fuel cell or any developed fuel cell.

The hydrogen (H2) or HHO generated can be put to direct use. In a further embodiment, the process fluid for the heat exchanger 4 could be air and the thermoelectric modules 6 can be thick or thin film.

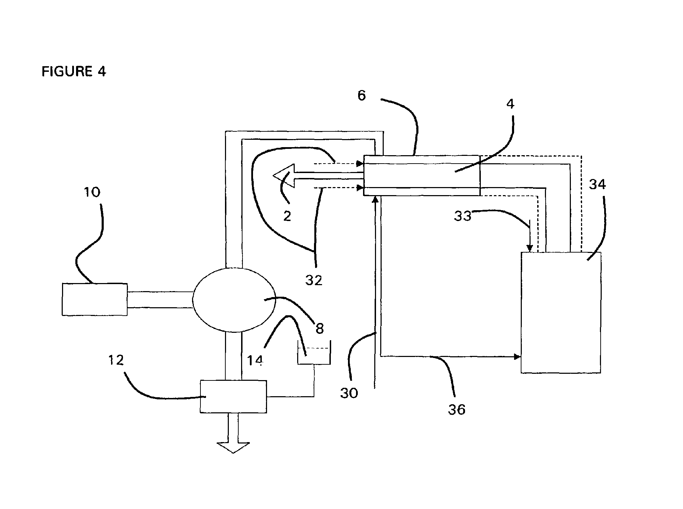

Figure 4 shows an embodiment of an assembly for the production of hydrogen (H2) or Brown's gas (HHO) using heat from an exhaust stream of a boiler 34.

The components of the assembly include: an air or water cooled heat exchanger 4 containing thermoelectric modules 6; a power regulator 8; a battery 10; a hydrogen (H2) or HHO fuel cell 12; a liquid holding tank 14; and a boiler 34.

The heat exchanger 4 uses water 30 as the process fluid and transfers heat from an exhaust stream 2 of a boiler 34 to the process fluid stream and electricity is generated using thermoelectric modules 6. The warm water effluent 36 from the heat exchanger 4 is used as feed water for the boiler 34.

The boiler 34 uses an air stream 33 as a feed for combustion. The electricity from the thermoelectric modules 6 flows through a power regulator 8 which regulates the voltage, and can transfer the electricity either directly to a fuel cell 12 or to charge a battery 10.

The fuel cell 12 can be a hydrogen (H2) fuel cell, such as a proton exchange fuel cell, or any HHO fuel cell.

The dashed lines in Figure 4 also show an embodiment where the heat exchanger 4 with thermoelectric modules 6 uses air stream 32 as the process fluid. In this embodiment, the cooling air 32 is also used as combustion fuel for the boiler 34.

It will be understood that the embodiments illustrated above show applications of the invention only for the purposes of illustration. In practice the invention may be applied to many different configurations, the detailed embodiments being straightforward for those skilled in the art to implement.

## Claims

1. Fuel production apparatus for use with a combustion device (1) comprising:-
a fuel cell (12) for generating a combustible gas (18); and
power supply means for said fuel cell (12), said power supply means comprising means (6) for converting energy from a source of waste energy associated with the combustion device (1) into electrical energy for powering said fuel cell (12);
**characterised in that** the generated combustible gas (18) is fed directly into an air intake stream of said combustion device (1) for combustion by the combustion device (1).

2. Fuel production apparatus according to claim 1, wherein said power supply means comprises one or more thermoelectric modules.

3. Fuel production apparatus according to claim 2, having one or more thin film thermoelectric modules.

4. Fuel production apparatus according to claim 2, having one or more thick film thermoelectric modules.

5. Fuel production apparatus according to any preceding claim, wherein the power supply means comprises one or more high and/or one or more low temperature thermoelectric modules.

6. Fuel production apparatus according to any preceding claim, wherein said waste energy source is derived from an exhaust (2) of the combustion device (1) combusting said combustible gas (18).

7. Fuel production apparatus according to claim 6, wherein the power supply means is provided at or adjacent an exhaust stream (2) from the combustion device (1).

8. Fuel production apparatus according to any preceding claim, wherein the combustion device (1) is an engine for a vehicle.

9. Fuel production apparatus according to claim 8 when dependent on any one of claims 1 to 5, wherein the waste energy source is derived from solar energy applied to the surface of the vehicle.

10. Fuel production apparatus according to claim 9, wherein the solar energy is collected using one or more in combination of photovoltaics (PV) and thermoelectric (TE) so called PV-TE, concentrated solar power (CSP) and thermoelectric (TE) so called CSP-TE or by techniques of artificial photosynthesis.

11. Fuel production apparatus according to any one of claims 1 to 7, wherein the combustion device (1) is a boiler.

12. Fuel production apparatus according to any one or claims 1 to 7, wherein the combustion device (1) is a fuel cell or a combined heat and power unit.

13. Fuel production apparatus according to any preceding claim, wherein the combustible gas (18) is Brown's gas (HHO).

14. Fuel production apparatus according to any one of claims 1 to 12, wherein the combustible gas (18) is hydrogen (H2).

15. Fuel production apparatus according to any preceding claim, wherein at least some of the electrical energy generated is stored in an electrical storage means (10).

## Patentansprüche

1. Brennstoff-Produktionsgerät zur Verwendung mit einer Verbrennungsanlage (1), bestehend aus:-
einer Brennstoffzelle (12) zur Erzeugung von brennbarem Gas (18); und
einer Stromversorgungsvorrichtung für besagte Brennstoffzelle (12), besagte Stromversorgungsvorrichtung bestehend aus der Vorrichtung (6) zur Energieumwandlung aus einer Quelle von Abfallenergie, verbunden mit der Verbrennungsanlage (1), in elektrische Energie für das Betreiben besagter Brennstoffzelle (12);
dadurch charakterisiert, dass das erzeugte brennbare Gas (18) direkt in einen Lufteinlassstrom der besagten Verbrennungsanlage (1), zur Verbrennung durch die Verbrennungsanlage (1), geleitet wird.

2. Brennstoff-Produktionsgerät gemäß Anspruch 1, wobei besagte Stromversorgungsvorrichtung ein oder mehrere thermoelektrische Module umfasst.

3. Brennstoff-Produktionsgerät gemäß Anspruch 2 mit einem oder mehreren thermoelektrischen Dünnschicht-Modulen.

4. Brennstoff-Produktionsgerät gemäß Anspruch 2 mit einem oder mehreren thermoelektrischen Dickschicht-Modulen.

5. Brennstoff-Produktionsgerät gemäß eines der vorhergehenden Ansprüche, wobei die Stromversorgungsvorrichtung ein oder mehrere thermoelektrische Hochtemperatur- und/oder ein oder mehrere Niedrigtemperatur-Module umfasst.

6. Brennstoff-Produktionsgerät gemäß eines der vorhergehenden Ansprüche, wobei besagte Abfallenergiequelle aus einem Abgaskanal (2) der Verbrennungsanlage (1) stammt, die besagtes brennbares Gas (18) verbrennt.

7. Brennstoff-Produktionsgerät gemäß Anspruch 6, wobei die Stromversorgungsvorrichtung an oder in der Nähe eines Abgasstromes (2) aus der Verbrennungsanlage (1) liegt.

8. Brennstoff-Produktionsgerät gemäß eines der vorhergehenden Ansprüche, wobei die Verbrennungsanlage (1) ein Motor für ein Fahrzeug ist.

9. Brennstoff-Produktionsgerät gemäß Anspruch 8, wenn er von einem der Ansprüche 1 bis 5 abhängt, wobei die Abfallenergiequelle aus Solarenergie stammt, die auf die Oberfläche des Fahrzeuges einwirkt.

10. Brennstoff-Produktionsgerät gemäß Anspruch 9, wobei die Solarenergie aus einem, oder mehreren in Kombination, fotovoltaischen (PV) und thermoelektrischen (TE) Modul(en), einem sogenannten PV-TE-Modul, aus konzentrierter Solarenergie (CSP) und thermoelektrischem (TE)-Modul, einem sogenannten CSP-TE-Modul, oder durch Techniken künstlicher Photosynthese gewonnen wird.

11. Brennstoff-Produktionsgerät gemäß eines der Ansprüche 1 bis 7, wobei die Verbrennungsanlage (1) ein Boiler ist.

12. Brennstoff-Produktionsgerät gemäß eines der Ansprüche 1 bis 7, wobei die Verbrennungsanlage (1) eine Brennstoffzelle oder ein kombiniertes Heiz- und Stromaggregat ist.

13. Brennstoff-Produktionsgerät gemäß eines der vorhergehenden Ansprüche, wobei das brennbare Gas (18) Brown's Gas (HHO) ist.

14. Brennstoff-Produktionsgerät gemäß eines der Ansprüche 1 bis 12, wobei das brennbare Gas (18) Wasserstoff (H₂) ist.

15. Brennstoff-Produktionsgerät gemäß eines der vorhergehenden Ansprüche, wobei mindestens eine gewisse Menge der erzeugten elektrischen Energie in einer elektrischen Speichervorrichtung (10) gespeichert wird.

## Revendications

1. Appareil de production de combustible à utiliser avec un dispositif de combustion (1) comprenant :
une pile à combustible (12) pour générer un gaz combustible (18) ; et
un moyen d'alimentation électrique pour ladite pile à combustible (12), ledit moyen d'alimentation électrique comprenant un moyen (6) pour convertir de l'énergie provenant d'une source d'énergie issue de déchets associée au dispositif de combustion (1) en énergie électrique pour alimenter ladite pile à combustible (12) ;
**caractérisé en ce que** le gaz combustible généré (18) est amené directement dans un flux d'amenée d'air dudit dispositif de combustion (1) pour combustion par le dispositif de combustion (1).

2. Appareil de production de combustible selon la revendication 1, dans lequel ledit moyen d'alimentation électrique comprend un ou plusieurs modules thermoélectriques.

3. Appareil de production de combustible selon la revendication 2, possédant un ou plusieurs modules thermoélectriques à film fin.

4. Appareil de production de combustible selon la revendication 2, possédant un ou plusieurs modules thermoélectriques à film épais.

5. Appareil de production de combustible selon l'une quelconque des revendications précédentes, dans lequel le moyen d'alimentation électrique comprend un ou plusieurs modules thermoélectriques à haute température et / ou un ou plusieurs à basse température.

6. Appareil de production de combustible selon l'une quelconque des revendications précédentes, dans lequel ladite source d'énergie issue de déchets est dérivée d'un échappement (2) du dispositif de combustion (1) assurant la combustion dudit gaz combustible (18).

7. Appareil de production de combustible selon la revendication 6, dans lequel le moyen d'alimentation électrique est fourni au niveau d'un flux d'échappement (2) ou de façon adjacente à celui-ci depuis le dispositif de combustion (1).

8. Appareil de production de combustible selon l'une quelconque des revendications précédentes, dans lequel le dispositif de combustion (1) est un moteur pour un véhicule.

9. Appareil de production de combustible selon la revendication 8 quand il dépend de l'une quelconque des revendications 1 à 5, dans lequel la source d'énergie issue de déchets est dérivée d'une énergie solaire appliquée à la surface du véhicule.

10. Appareil de production de combustible selon la revendication 9, dans lequel l'énergie solaire est collectée par le biais d'une ou de plusieurs parmi une combinaison d'énergie photovoltaïque (PV) et thermoélectrique (TE) communément appelée PV-TE, d'énergie solaire concentrée (ESC) et thermoélectrique (TE) communément appelée CSP-TE ou par des techniques de photosynthèse artificielle.

11. Appareil de production de combustible selon l'une quelconque des revendications 1 à 7, dans lequel le dispositif de combustion (1) est une chaudière.

12. Appareil de production de combustible selon l'une quelconque des revendications 1 à 7, dans lequel le dispositif de combustion (1) est une pile à combustible ou une unité de production combinée chaleur et électricité.

13. Appareil de production de combustible selon l'une quelconque des revendications précédentes, dans lequel le gaz combustible (18) est de l'essence brune (HHO).

14. Appareil de production de combustible selon l'une quelconque des revendications 1 à 12, dans lequel le gaz combustible (18) est de l'hydrogène (H₂).

15. Appareil de production de combustible selon l'une quelconque des revendications précédentes, dans lequel au moins une partie de l'énergie électrique générée est stockée dans un moyen de stockage électrique (10).
